# EUROPÄISCHE PATENTSCHRIFT

(11) **EP 2 206 575 B1**
(45) Veröffentlichungstag und Bekanntmachung des Hinweises auf die Patenterteilung: **06.11.2013**
(21) Anmeldenummer: 10000119.7
(22) Anmeldetag: 08.01.2010
(51) Int. Cl.: B23K 26/03, B23K 26/34, B23K 26/14, F01D 5/00

(54) **Vorrichtung zur Reparatur der Schaufeln von BLISK-Trommeln mittels Laserstrahlauftragsschweißen**
Device for repairing blades of BLISK rotors with laser beam build-up welding
Dispositif de réparation des aubes de turbine d'un disque aubagé monobloc (BLISK) par soudure par chargement au laser

(30) Priorität: 12.01.2009 DE 102009004661
(43) Veröffentlichungstag der Anmeldung: 14.07.2010
(73) Patentinhaber: Rolls-Royce Deutschland Ltd & Co KG, 15827 Blankenfelde-Mahlow (DE)
(72) Erfinder: Zhu, Leping, Dr., 64291 Darmstadt (DE)
(74) Vertreter: Weber, Joachim

(56) Entgegenhaltungen:
- EP-A1- 1 340 583
- EP-A1- 1 649 966
- EP-A1- 1 927 424
- EP-A1- 2 008 756
- WO-A2-2005/030429

## Beschreibung

Die Erfindung betrifft eine Vorrichtung zur Reparatur der Schaufeln von BLISK-Trommeln für Gasturbinen mittels Laserstrahlauftragsschweißen, die eine Laserquelle und eine Laseroptik zur Erzeugung eines fokussierten Laserstrahls und eine an ein Pulverreservoir angeschlossene Pulverleitung zur Zuführung des mit dem Laserstrahl aufzuschmelzenden Metallpulvers zum Schweißbereich umfasst.

Die Rotoren der Verdichter von Gasturbinentriebwerken werden zur Gewichtsreduzierung sowie zur Erzielung einer optimalen Strömungsführung und eines hohen Verdichterwirkungsgrades bekanntermaßen in BLISK-Bauweise, das heißt mit integral an die Rotorscheiben angeformten Schaufeln, ausgeführt. Die so gefertigten Rotorscheiben werden zur Ausbildung von Verdichtertrommeln anschließend durch Verschweißen oder Verschrauben fest miteinander verbunden. Zur Reparatur der durch Sand und Staub oder durch Einwirkung von Fremdobjekten, zum Beispiel Steine, insbesondere an den Vorder- und Hinterkanten und an den Spitzen hoch belasteten Schaufeln ist es bereits bekannt, den schadhaften Schaufelbereich zunächst spanend zu entfernen, anschließend durch Auftragsschweißen wieder aufzufüllen und danach zur Herstellung des Sollmaßes noch einmal spanend zu bearbeiten. Aus der US 5038014 ist beispielsweise ein Verfahren zur Schaufelreparatur durch Laserauftragsschweißen bekannt, bei dem der schadhafte Schaufelbereich ausgehend von den Schaufelspitzen entfernt wird und das entfernte Material anschließend durch Laserauftragsschweißen wieder bis zur Schaufelspitze aufgetragen wird. Danach erfolgt die übliche mechanische Bearbeitung zur Herstellung des Fertigmaßes und eine Wärmebehandlung. Die zum Laserauftragsschweißen vorgesehene Vorrichtung umfasst ein mit Argon beaufschlagtes Pulverreservoir, von dem das Pulvermaterial über eine gekühlte Austrittsöffnung zum Schweißbereich gefördert wird, und eine Laserquelle mit Laseroptik zur Erzeugung eines entsprechend geformten Laserstrahls zum Aufschmelzen des Pulvermaterials. Mit dieser Anordnung können BLISK-Schaufeln zwar von den Schaufelspitzen her durch Laserauftragsschweißen repariert werden, jedoch ist es aufgrund des geringen Abstandes zwischen den Schaufeln benachbarter Stufen einer in BLISK-Bauweise ausgeführten Verdichtertrommel und des hohen Platzbedarfs der bekannten Laserauftragsschweißvorrichtung sowie des gegenüber der umgebenden Atmosphäre ungeschützten Schweißprozesses nicht möglich, die schadhaften Bereiche an den Vorder- und Hinterkanten der Schaufeln einer BLISK-Trommel mit einer derartigen Vorrichtung in hoher Qualität zu reparieren.

Die EP 2 008 756 A1 beschreibt ein Verfahren und eine Vorrichtung zur Reparatur von Blisks von Gasturbinen, mit einem Endoskop mit einer Beobachtungsoptik, welche mit einer flexiblen Lichtleiteinrichtung versehen ist, mit einer Laserquelle, welche mit einer flexiblen Lichtleitasereinrichtung verbunden ist, mit einem Zusatzmaterialförderer zur Zuführung von Schweißpulver durch eine flexible Leitung, mit einer Wasserversorgung, welche mit einer flexiblen Leitung verbunden ist, und mit einer Edelgasversorgung, welche zur Zufuhr von Edelgas mit einer flexiblen Leitung verbunden ist, wobei die flexiblen Leitungen, die flexible Lichtleiteinrichtung und die flexible Lichtfasereinrichtung zumindest an ihren distalen Endbereichen zu einem flexiblen, länglichen Bearbeitungsgerät zusammengefasst sind, sowie mit einem Endoskop und einer mit einem Antrieb versehenen, flexiblen Schleifeinrichtung, welche an ihrem distalen Ende mit einem rotierenden Schleifkörper versehen ist, wobei die Vorrichtung im nicht-demontierten Zustand der Gasturbine verwendet wird.

Der Erfindung liegt die Aufgabe zugrunde, eine Vorrichtung zur Reparatur der Schaufeln von BLISK-Trommeln mittels Laserstrahlauftragsschweißen zu entwickeln, die auf dem zwischen benachbarten Verdichterstufen begrenzten Raum eine Schaufelreparatur an den Schaufelvorder- und -hinterkanten in hoher Qualität gestattet.

Erfindungsgemäß wird die Aufgabe mit einer gemäß den Merkmalen des Patentanspruchs 1 ausgebildeten Laserstrahlauftragsschweißvorrichtung gelöst. Vorteilhafte Weiterbildungen der Erfindung sind Gegenstand der Unteransprüche.

Der Grundgedanke der Erfindung besteht in einer modulartig zusammengesetzten, rohrartig langgestreckten Schweißapparatur mit einem an eine Laserquelle angeschlossenes Verbindungsmodul, in dem der eintretende Laserstrahl in Längsrichtung umgelenkt und in Parallelrichtung geformt wird. An der einen Seite des Verbindungsmoduls ist ein Kameramodul für eine CCD-Kamera angeschlossen, um die exakte Positionierung der Schweißapparatur und das Auftragen des geschmolzenen Metallpulvers an der betreffenden Schaufel beobachten und steuern zu können. An die dem Kameramodul gegenüberliegende Seite der Verbindungsmoduls schließt sich ein Strahlformungsmodul zur weiteren Formung und zur Fokussierung des Laserstrahls und anschließend ein schlank ausgebildetes Schweißkopfmodul an, in dessen Längsrichtung sich der Laserstrahl und eine mit einem Schweißpulverdosierer verbundene Pulverleitung erstrecken, die in einem Beschichtungskopf zu einer seitlichen Austrittsöffnung hin umgelenkt werden. An die Austrittsöffnung schließt sich ein mit einer Schutzgasquelle verbundenes, einen offenen Schutzgaskanal bildendes Schutzgasabschirmmodul, das die auf die Schaufelkante aufgetragene Metallbeschichtung mit einem Schutzgas umgibt und während des Aufschmelzens und Abkühlens vor Kontamination schützt. Mit der so ausgebildeten Vorrichtung ist es trotz des zwischen zwei benachbarten Stufen einer BLISK-Trommel geringen Abstandes möglich, eine Reparatur von beschädigten Schaufeln durch Laserauftragsschweißen an den entsprechend vorbereiteten Vorder- und Hinterkanten in hoher Präzision und Qualität der Beschichtung durchzuführen.

Gemäß einem weiteren Merkmal der Erfindung umfasst das Schutzgasabschirmmodul ein am Schweißkopfmodul angebrachtes festes Kanalteil und ein austauschbares, an die betreffende Schaufelform und -größe angepasstes bewegliches Kanalteil sowie ein geschlitztes, jeweils an der zu reparierenden Schaufel temporär angebrachtes Gleitelement, auf dem sich die Schweißapparatur mit dem Schutzgasabschirmmodul während des Beschichtungsprozesses abstützt. Der Schweißbereich ist dadurch von einem Schutzgas quasi umschlossen, so dass eine Kontaminierung des Schweißmaterials während des Auftragens, Aufschmelzens und Abkühlens nahezu ausgeschlossen ist.

In Ausgestaltung der Erfindung sind im Verbindungs- und Strahlformungsmodul Kollimator- und Fokussierlinsen zur Strahlformung und -fokussierung angeordnet, die über einen an eine Wasserquelle angeschlossenen Kühlkreislauf gekühlt werden können.

In weiterer Ausbildung der Erfindung ist auch das Strahlformungsmodul zur Vermeidung einer Kontamination der optischen Elemente der Schweißapparatur an die Schutzgasquelle angeschlossen ist.

In Ausgestaltung der Erfindung sind zur Umlenkung des Laserstrahls im Verbindungsmodul und im Schweißkopfmodul Ablenkspiegel und zur Umlenkung des Weißlichtstrahls zur CCD-Kamera ein Spiegel angeordnet.

In weiterer Ausgestaltung der Erfindung ist an dem Verbindungsmodul oder dem Strahlformungsmodul ein Befestigungselement zur Halterung der Schweißapparatur an einem Industrieroboter oder dgl. angebracht.

In weiterer Ausgestaltung der Erfindung ist zur Auskopplung des Laserlichts in das Verbindungsmodul ein mit diesem verbundener, über ein Lichtfaserkabel (15) an die Laserquelle angeschlossener Lichtfaserstecker vorgesehen .

Ein Ausführungsbeispiel der Erfindung wird anhand der Zeichnung näher erläutert. Es zeigen:
- Fig. 1: eine perspektivische Darstellung einer in BLISK-Bauweise ausgebildeten Verdichtertrommel für eine Fluggasturbine mit einzelnen, an der Vorder- oder Hinterkante beschädigten Schaufeln;
- Fig. 2: eine schematische Darstellung einer Vorrichtung zur Schaufelreparatur an einer BLISK-Trommel durch Laserauftragsschweißen;
- Fig. 3: die Vorrichtung nach Fig. 2 mit einer Darstellung der Strahlungsgänge im Innern der Vorrichtung;
- Fig. 4: eine schematische Darstellung der Vorrichtung zur Schutzgasabschirmung des Auftragsschweißbereichs; und
- Fig. 5: eine Teilansicht einer Schweißapparatur während des Laserauftragsschweißens an einer beschädigten Schaufelvorderkante.

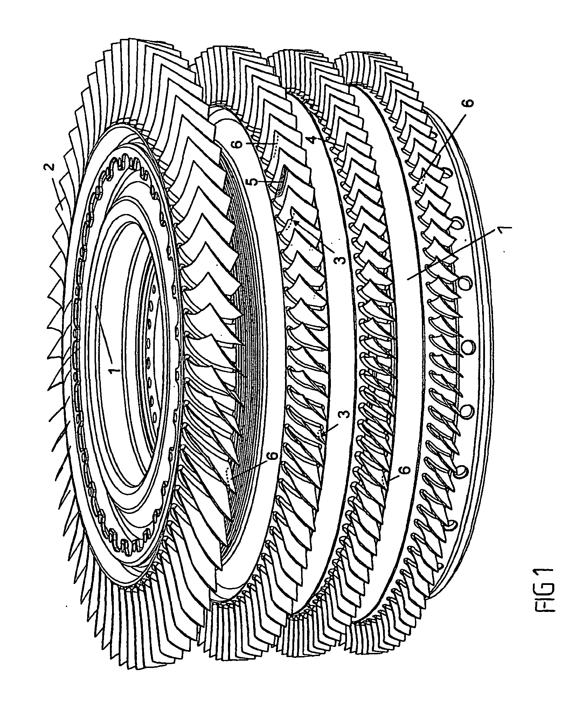

Die in Fig. 1 dargestellte vierstufige BLISK-Trommel umfasst vier fest miteinander verbundene Rotorscheiben 1 mit an deren Außenumfang jeweils integral angeformten Schaufeln 2, von denen einzelne an den Vorder- oder Hinterkanten durch Fremdkörpereinwirkung entstandene beschädigte Bereiche 3 aufweisen. Für das zur Reparatur der beschädigten Schaufeln vorgesehene Laserstrahlauftragsschweißen werden die beschädigten Bereiche 3 ausgefräst, so dass ein abgetragener Bereich 4 erzeugt wird. An der so vorbereiteten beschädigten Schaufel wird die nachfolgend beschriebene Vorrichtung zum Laserstrahlauftragsschweißen positioniert, um in dem abgetragenen Bereich 4 der Schaufelvorder- oder -hinterkante unter einem Schutzgasschirm mehrere Schichten aus einem aufgeschmolzenen, an das Schaufelmaterial angepassten Metallpulver aufzubringen und dadurch den in Fig. 1 gezeigten, an einem beschädigten Bereich einer Schaufelhinterkante erzeugten aufgetragenen Bereich 5 auszubilden. Dieser aufgetragene Bereich 5 wird anschließend spanend bearbeitet, so dass letztlich ein reparierter Bereich 6 entsteht. Auf diese Art sollen alle beschädigten Schaufeln in hoher Qualität repariert werden.

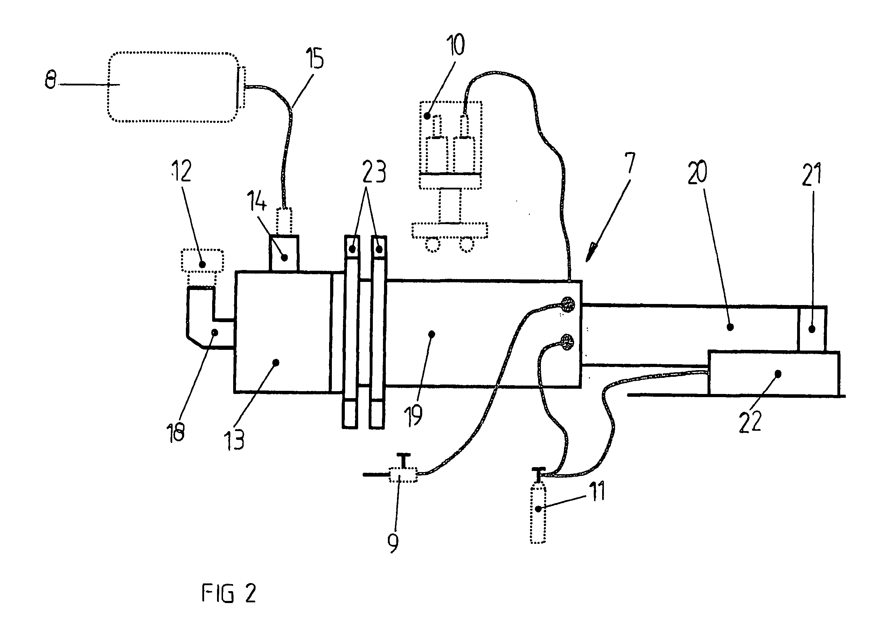

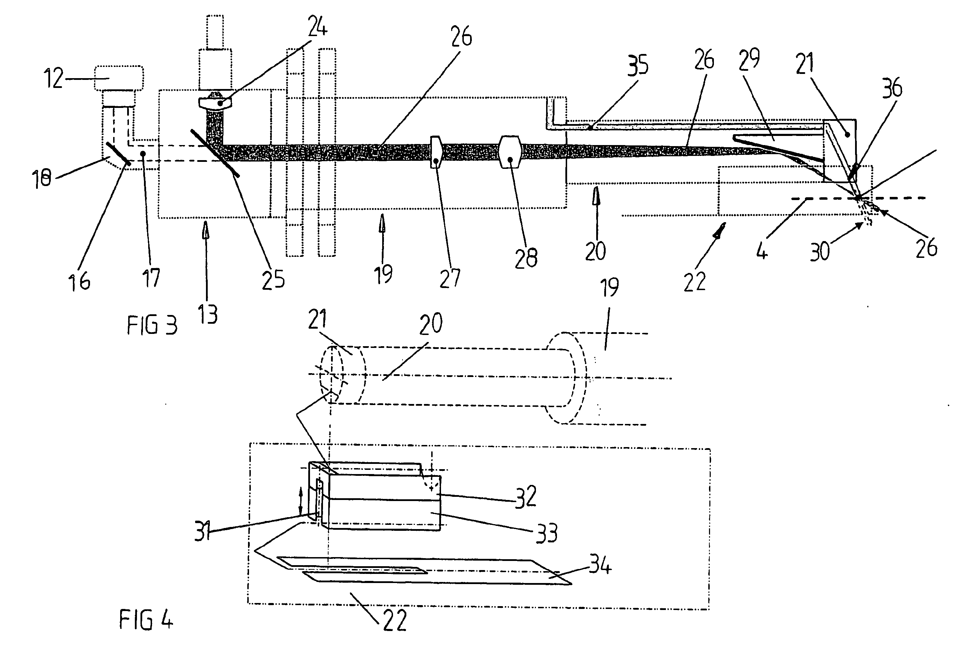

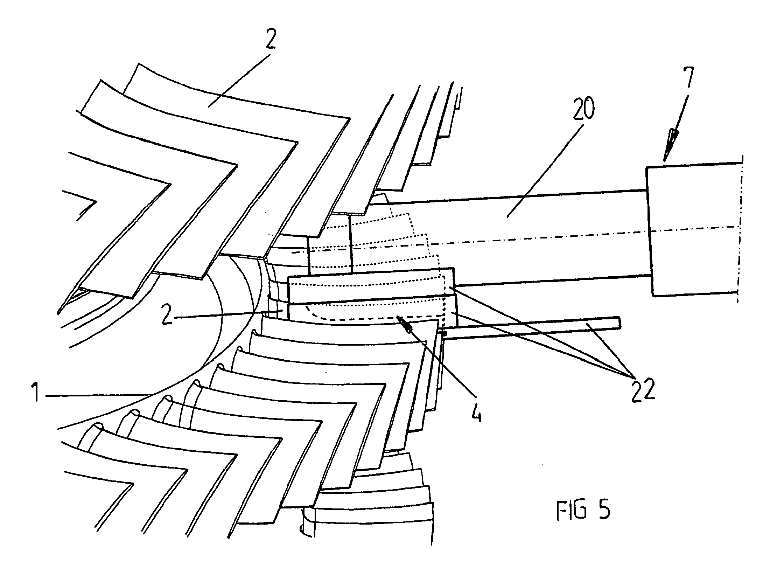

Die in den Figuren 2 und 3 dargestellte Vorrichtung zum Laserauftragsschweißen an den vorbearbeiteten beschädigten Schaufelkanten umfasst eine an der zu bearbeitenden Schaufel 2 (siehe Fig. 5) zu positionierende, aus mehreren Modulen zusammengesetzte Schweißapparatur 7, der gemäß Fig. 2 eine Laserquelle 8, eine Wasserquelle 9, ein Schweißpulverdosierer 10 und eine Schutzgasquelle 11 sowie eine CCD-Kamera 12 zugeordnet sind. Ein Verbindungsmodul 13 ist über einen Lichtfaserstecker 14 und ein Lichtfaserkabel 15 an die Laserquelle 8 angeschlossen und stellt das Verbindungsglied einerseits zu einem mit einem Spiegel 16 zur Umlenkung eines Weißlichtstrahls 17 zur CCD-Kamera 12 versehenen Kameramodul 18 und andererseits zu einem Strahlformungsmodul 19 dar, an das sich ein schmales Schweißkopfmodul 20 mit an dessen freiem Ende angebrachtem, eine seitliche Austrittsöffnung 36 aufweisenden Beschichtungskopf 21 und einem mobilen Schutzgasabschirmmodul 22 anschließt. Mit dem Strahlformungsmodul 19 ist ein Befestigungselement 23 zur Fixierung der Schweißapparatur 7 an einem Industrieroboter oder einer anderen NC-gesteuerten Handhabungsanlage (nicht dargestellt) verbunden. An das Strahlformungsmodul 19 sind sowohl der Schweißpulverdosierer 10 als auch die Wasserquelle 9 angeschlossen. Die Schutzgasquelle 11 ist einerseits mit dem Strahlformungsmodul 19 und andererseits mit dem Schutzgasabschirmmodul 22 verbunden.

Mit Hilfe der CCD-Kamera 12 wird die modulartig zusammengesetzte Schweißapparatur 7 an der zu reparierenden Schaufel lagerichtig positioniert und über der betreffenden Schaufelkante (abgetragener Bereich 4) verfahren und gleichzeitig das Auftragen der Schweißschichten überwacht.

Der in das Verbindungsmodul 13 eintretende Laserstrahl wird über eine aus einer ersten Kollimatorlinse 24 und erstem Ablenkspiegel 25 gebildete Optik parallelgerichtet und in das Strahlformungsmodul 19 umgelenkt, in dem der Laserstrahl 26 mittels einer zweiten Kollimatorlinse 27 noch einmal parallel gerichtet und anschließend mit einer Fokussierlinse 28 fokussiert und mittels eines zweiten Ablenkspiegels 29 auf den im Schweißkopfmodul 20 über eine Pulverleitung 35 zugeführten und auf die zu beschichtende Schaufelkante auftreffenden Metallpulverstrahl 30 abgelenkt. Sowohl der über die Pulverleitung 35 zugeführte Metallpulverstrahl 30 als auch der Laserstrahl 26 werden im Beschichtungskopf 21 zu dessen seitlicher Austrittsöffnung 36 hin umgelenkt, wobei das Metallpulver auf der zu beschichtenden Schaufelkante aufgeschmolzen wird und entlang des abgetragenen Bereichs 4 der beschädigten Schaufel mehrere Metallschichten übereinander aufgetragen werden, um den abgetragenen Bereich 4 aufzufüllen.

Am Beschichtungskopf 21 ist das Schutzgasabschirmmodul 22 mit einem an der freien Seite offenen, an die Schutzgasquelle 11 angeschlossenen Schutzgaskanal 31 zur Aufnahme des zu reparierenden Schaufelteils angebracht. Der Schutzgaskanal 31 ist zur Austrittsöffnung 36 des Beschichtungskopfes 21 hin offen, so dass die betreffende Schaufelkante mit dem aufgeschmolzenen Metallpulver beschichtet werden kann, und zwar in einer in dem Schutzgaskanal 31 herrschenden Schutzgasatmosphäre. Das Schutzgasabschirmmodul 22 umfasst ein fest mit dem Beschichtungskopf 21 verbundenes Kanalteil 32 und ein an diesem austauschbar angebrachtes und an unterschiedliche Schaufelgrößen anpassbares bewegliches Kanalteil 33 sowie ein entsprechend der Kanalöffnung bzw. der Schaufelkante geschlitzt ausgeführtes Gleitelement 34. An dem an der zu reparierenden Schaufel befestigten Gleitelement 34 ist das Schutzgasabschirmmodul 22 während der Vorschubbewegung der Schweißapparatur 7 beim Auftragen des aufgeschmolzenen Metallpulvers geführt. Die aufgeschmolzene Metallpulverschicht befindet sich somit während des Auftragens und des Abkühlens in einer lokalen Schutzgasatmosphäre, so dass eine Kontamination des aufgebrachten Materials verhindert oder zumindest verringert wird. Wie Fig. 3 zeigt, ist die Schutzgasquelle 11 auch an das Strahlformungsmodul 19 angeschlossen, so dass auch Kontaminationen im Inneren der Schweißapparatur, und zwar insbesondere der Linsen und Ablenkspiegel, vermieden werden. Die im Verbindungs- und im Strahlformungsmodul 13, 19 angeordneten Strahlformungs- und Fokussierlinsen werden über einen an die Wasserquelle 9 angeschlossenen Kühlkreislauf (nicht dargestellt) gekühlt.

Durch die zuvor beschriebene Schweißapparatur 7 mit dem an deren vorderem Teil vorgesehenen, schmalen Schweißkopfmodul 20, in dem der Schweißstrahl 26 und der Metallpulverstrahl 30 parallel geführt und zu einer seitlichen Austrittsöffnung 36 mit daran anschließendem Schutzgasabschirmmodul 22 abgelenkt werden, ist auch bei dem begrenzten Raum zwischen den benachbarten Schaufelreihen einer BLISK-Trommel eine gute Zugänglichkeit zu den Vorder- und Hinterkanten der Schaufeln unter lokaler Schutzgasabschirmung gewährleistet, so dass mit vergleichsweise geringem Aufwand auf einfache Weise und in hoher Qualität eine Reparatur der Schaufeln von BLISK-Trommeln durchgeführt werden kann.

### Bezugszeichenliste

- 1: Rotorscheiben
- 2: Schaufeln
- 3: beschädigter Bereich v. 2
- 4: abgetragener Bereich v. 2
- 5: aufgetragener Bereich
- 6: reparierter Bereich
- 7: Schweißapparatur
- 8: Laserquelle
- 9: Wasserquelle
- 10: Schweißpulverdosierer
- 11: Schutzgasquelle
- 12: CCD-Kamera
- 13: Verbindungsmodul
- 14: Lichtfaserstecker
- 15: Lichtfaserkabel
- 16: Spiegel
- 17: Weißlichtstrahl
- 18: Kameramodul
- 19: Strahlformungsmodul
- 20: Schweißkopfmodul
- 21: Beschichtungskopf
- 22: Schutzgasabschirmmodul
- 23: Befestigungselement
- 24: 1. Kollimatorlinse
- 25: 1. Ablenkspiegel
- 26: Laserstrahl
- 27: 2. Kollimatorlinse
- 28: Fokussierlinse
- 29: 2. Ablenkspiegel
- 30: Metallpulverstrahl
- 31: offener Schutzgaskanal
- 32: festes Kanalteil
- 33: bewegliches Kanalteil
- 34: geschlitztes Gleitelement
- 35: Pulverleitung
- 36: seitliche Austrittsöffnung v.

## Patentansprüche

1. Vorrichtung zur Reparatur der Schaufeln von BLISK-Trommeln für Gasturbinen durch Laserstrahlauftragsschweißen, die eine Laserquelle (8) und eine Laseroptik zur Erzeugung eines fokussierten Laserstrahls und eine an ein Pulverreservoir angeschlossene Pulverleitung (35) zur Zuführung des mit dem Laserstrahl (26) aufzuschmelzenden Metallpulverstrahls (30) zum Schweißbereich umfasst, mit einer modulartig zusammengesetzten Schweißapparatur (7), umfassend
- ein an die Laserquelle (8) angeschlossenes Verbindungsmodul (13), in dem der eintretende Laserstrahl (26) geformt und umgelenkt wird,
- ein an der gegenüberliegenden Seite angeschlossenes Strahlformungsmodul (19) zur Formung und Fokussierung des Laserstrahls (26), und
- ein an das Strahlformungsteil (19) anschließendes schlankes Schweißkopfmodul (20), in dessen Längsrichtung sich der Laserstrahl (26) und die Pulverleitung (35) erstrecken,
**dadurch gekennzeichnet,**
- **dass** an einer Seite des Verbindungsmoduls (13) ein Kameramodul (18) für eine CCD-Kamera (12), angeschlossen ist,
- **dass** der Laserstrahl (26) und die Pulverleitung (35) in einem Beschichtungskopf (21) zu einer seitlichen Austrittsöffnung (36) gelenkt werden; und
- **dass** sich an die Austrittsöffnung (36) ein mit einer Schutzgasquelle (11) verbundenes, einen offenen Schutzgaskanal (31) bildendes Schutzgasabschirmmodul (22) anschließt, das die auf die Schaufelkante aufgetragene Metallbeschichtung während des Aufschmelzens und Abkühlens vor Kontamination schützt, wobei das Schutzgasabschirmmodul (22) ein am Schweißkopfmodul (20) angebrachtes festes Kanalteil (32) und ein austauschbares, an die betreffende Schaufelform und -größe angepasstes bewegliches Kanalteil (33) sowie ein geschlitztes, jeweils an der zu reparierenden Schaufel temporär angebrachtes Gleitelement (34), auf dem sich die Schweißapparatur (7) mit dem Schutzgasabschirmmodul (22) während des Beschichtungsprozesses abstützt, umfasst.

2. Vorrichtung nach Anspruch 1, **gekennzeichnet durch** die Anordnung von Kollimator- und Fokussierlinsen (24, 27, 28) im Verbindungs- und Strahlformungsmodul (13, 19) zur Strahlformung und -fokussierung sowie einen an eine Wasserquelle (9) angeschlossenen Kühlkreislauf zur Kühlung der Linsen.

3. Vorrichtung nach Anspruch 1, **dadurch gekennzeichnet, dass** das Strahlformungsmodul (19) zur Vermeidung einer Kontamination der optischen Elemente der Schweißapparatur (7) an die Schutzgasquelle (11) angeschlossen ist.

4. Vorrichtung nach Anspruch 1, **dadurch gekennzeichnet, dass** zur Umlenkung des Laserstrahls (26) im Verbindungsmodul (13) und im Schweißkopfmodul (20) Ablenkspiegel (25, 29) und zur Umlenkung des Weißlichtstrahls zur CCD-Kamera (12) ein Spiegel (16) angeordnet sind.

5. Vorrichtung nach Anspruch 1, **dadurch gekennzeichnet, dass** an dem Verbindungsmodul oder dem Strahlformungsmodul (13, 19) ein Befestigungselement (23) zur Halterung der Schweißapparatur (7) an einem Industrieroboter angebracht ist.

6. Vorrichtung nach Anspruch 1, **dadurch gekennzeichnet, dass** an dem Verbindungsmodul (13) ein über ein Lichtfaserkabel (15) mit der Laserquelle (8) verbundener Lichtfaserstecker (14) zur Auskopplung des Laserlichts in das Verbindungsmodul (13) vorgesehen ist.

## Claims

1. Arrangement for the repair of the blades of BLISK drums for gas turbines by means of laser deposition welding, this arrangement including a laser source (8) and laser optics for generating a focussed laser beam and a powder line (35) connected to a powder reservoir for supplying the metal powder jet (30) to be melted by the laser beam (26) to the weld area, and having a welding apparatus (7) of the modular type, including
- a connection module (13) which is connected to the laser source (8) and in which the entering laser beam (26) is shaped and deflected,
- a beam-shaping module (19) connected at the opposite side for shaping and focussing the laser beam (26), and
- a slender welding-head module (20) adjoining the beam-shaping module (19) with the laser beam (26) and the powder line (35) extending in the longitudinal direction of said welding-head module (20),
**characterized in that**
- a camera module (18) for a CCD camera (12) is connected to one side of the connection module (13),
- the laser beam (26) and the powder line (35) are directed in a deposition head (21) towards a sideward exit port (36), and
- adjoining the exit port (36) a protective-gas shielding module (22) which, being connected to a protective-gas source (11) and forming an open protective-gas duct (31), protects the metal deposit applied to the blade edge against contamination during melting and cooling, with the protective-gas shielding module (22) including a fixed duct portion (32) arranged on the welding-head module (20) and an exchangeable, mobile duct portion (33) suited to the respective blade shape and size as well as a slotted sliding element (34) temporarily attached to the blade to be repaired and bearing the welding apparatus (7) with the protective-gas shielding module (22) during the deposition process.

2. Arrangement in accordance with Claim 1, **characterized by** the provision of collimating and focussing lenses (24, 27, 28) in the connection and beam-shaping module (13, 19) for beam-shaping and focussing as well as a cooling circuit connected to a water source (9) for cooling the lenses.

3. Arrangement in accordance with Claim 1, **characterized in that** the beam-shaping module (19) is connected to the protective-gas source (11) to prevent the optical elements of the welding apparatus (7) from being contaminated.

4. Arrangement in accordance with Claim 1, **characterized in that** deflecting mirrors (25, 29) arranged in the connection module (13) and in the welding-head module (20) for deflecting the laser beam (26) and a mirror (16) for deflecting the white-light beam to the CCD camera (12) are provided.

5. Arrangement in accordance with Claim 1, **characterized in that** a fixation element (23) for attaching the welding apparatus (7) to an industrial robot is provided on the connection module or the beam-shaping module (13, 19).

6. Arrangement in accordance with Claim 1, **characterized in that** a light-fiber connector (14) for coupling out the laser light into the connection module (13) is provided on the connection module (13), with the light-fiber connector (14) being connected to the laser source (8) via a light-fiber cable (15).

## Revendications

1. Dispositif destiné à la réparation des aubes de tambours BLISK pour turbines à gaz par soudage au laser avec apport de métal, qui comprend une source laser (8) et une optique laser pour générer un rayon laser focalisé, et une conduite de poudre (35) raccordée à un réservoir de poudre pour amener sur la zone de soudage le faisceau de poudre métallique (30) qui doit être fondu avec le rayon laser (26), ainsi qu'un appareillage de soudage (7) de structure modulaire comprenant
- un module de jonction (13) raccordé à la source laser (8), dans lequel le rayon laser (26) incident est modelé et dévié,
- un module de modelage de rayon (19) raccordé du côté opposé, destiné à modeler et focaliser le rayon laser (26), et
- un module de tête de soudage effilé (20) se raccordant au module de modelage de rayon (19), dans le sens longitudinal duquel s'étendent le rayon laser (26) et la conduite de poudre (35),
**caractérisé en ce**
- **qu'**à un côté du module de jonction (13) est raccordé un module de caméra (18) pour une caméra numérique (12),
- **que** dans une tête de revêtement (21), le rayon laser (26) et la conduite de poudre (35) sont dirigés vers un orifice de sortie (36) latéral, et
- **qu'**à l'orifice de sortie (36) se raccorde un module de protection par gaz protecteur (22) relié à une source de gaz protecteur (11) et formant un canal de gaz protecteur ouvert (31), et qui, pendant la fusion et le refroidissement, protège contre la contamination le revêtement métallique appliqué sur le bord d'aube, sachant que le module de protection par gaz protecteur (22) comprend une partie de canal fixe (32) placée sur le module de tête de soudage (20) et une partie de canal mobile (33), interchangeable, adaptée à la forme et à la taille de l'aube concernée, ainsi qu'un élément coulissant (34) fendu fixé temporairement à l'aube devant être réparée, sur lequel s'appuie pendant l'opération de revêtement l'appareillage de soudage (7) avec le module de protection par gaz protecteur (22).

2. Dispositif selon la revendication n° 1, **caractérisé par** l'arrangement de lentilles collimatrices et focalisatrices (24, 27, 28) dans le module de jonction et de modelage de rayon (13, 19), ledit arrangement étant destiné à modeler et focaliser le rayon, ainsi que par un circuit de refroidissement raccordé à une source d'eau (9) et destiné à refroidir les lentilles.

3. Dispositif selon la revendication n° 1, **caractérisé en ce que** le module de modelage de rayon (19) est raccordé à la source de gaz protecteur (11) pour éviter une contamination des éléments optiques de l'appareillage de soudage (7).

4. Dispositif selon la revendication n° 1, **caractérisé en ce que** sont disposés des miroirs de déviation (25, 29) pour dévier le rayon laser (26) dans le module de jonction (13) et dans le module de tête de soudage (20), ainsi qu'un miroir (16) pour dévier le rayon de lumière blanche sur la caméra numérique (12).

5. Dispositif selon la revendication n° 1, **caractérisé en ce que** sur le module de jonction ou sur le module de modelage de rayon (13, 19) est monté un élément de fixation (23) permettant de fixer l'appareillage de soudage (7) à un robot industriel.

6. Dispositif selon la revendication n° 1, **caractérisé en ce que** sur le module de jonction (13) est prévu un connecteur de fibre optique (14) relié à la source laser (8) par un câble de fibre optique (15) et permettant de découpler la lumière laser dans le module de jonction (13).
